(19) Europäisches Patentamt / European Patent Office / Office européen des brevets

(11) **EP 2 966 275 B1**

(12) **FASCICULE DE BREVET EUROPEEN**

(45) Date de publication et mention de la délivrance du brevet:
**05.04.2017 Bulletin 2017/14**

(51) Int Cl.:
*F01N 3/20* *(2006.01)*  *F01N 9/00* *(2006.01)*
*F01N 3/10* *(2006.01)*  *F01N 3/08* *(2006.01)*
*F01N 3/021* *(2006.01)*  *F01N 3/035* *(2006.01)*

(21) Numéro de dépôt: **15173378.9**

(22) Date de dépôt: **23.06.2015**

(54) **DISPOSITIF DE DÉPOLLUTION DE GAZ D'ÉCHAPPEMENT D'UN MOTEUR DE VÉHICULE AUTOMOBILE COMPRENANT UN CATALYSEUR DE RÉDUCTION CATALYTIQUE SÉLECTIVE**

ABGASREINIGUNGSVORRICHTUNG EINES KRAFTFAHRZEUGMOTORS UMFASSEND EINEN KATALYSATOR MIT SELEKTIVER KATALYTISCHER REDUKTION

EXHAUST GAS PURIFICATION DEVICE OF A MOTOR VEHICLE ENGINE COMPRISING A SELECTIVE CATALYTIC REDUCTION CATALYST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2014 FR 1456557**

(43) Date de publication de la demande:
**13.01.2016 Bulletin 2016/02**

(73) Titulaire: **PEUGEOT CITROËN AUTOMOBILES SA 78140 Vélizy-Villacoublay (FR)**

(72) Inventeurs:
• **CREHAN, Gabriel 92420 VAUCRESSON (FR)**
• **BIZET, Charles 94170 LE PERREUX SUR MARNE (FR)**

(56) Documents cités:
**EP-A1- 2 226 482      FR-A1- 2 998 001**
**US-A1- 2012 258 015**

**Description**

L'invention concerne les moteurs à combustion, et plus particulièrement les moteurs à combustion équipés d'un catalyseur de réduction catalytique sélective et un catalyseur d'oxydation.

Les faibles niveaux d'oxydes d'azote à la sortie de l'échappement requis par les législations actuelles impliquent l'adoption de dispositifs de dépollution dont le rôle est de réduire les oxydes d'azote.

Une solution consiste à utiliser un catalyseur de réduction catalytique sélective ou SCR pour « Selective Catalytic Reducer » en anglais, lequel détruit les oxydes d'azote en les faisant réagir avec un agent réducteur, par exemple de l'ammoniac, $NH_3$, lequel est injecté directement dans la ligne d'échappement. L'ammoniac, $NH_3$, est stocké dans un revêtement de$NO_x$ catalytique de type poreux. Lorsque la température devient supérieure à typiquement 150°C, le $NH_3$ absorbé réagit avec les oxydes d'azote $NO_x$ présent dans les gaz d'échappement et est transformé en azote $N_2$ et en eau $H_2O$.

Typiquement un catalyseur d'oxydation diesel, ou DOC, pour « Diesel Oxydation Catalyst » en anglais est placé en amont pour assurer un rapport optimum $NO_2/NO_x$ lequel permet une réaction de réduction plus rapide à des températures basses.

On peut également ajouter une fonction de stockage de $NO_x$ au DOC afin de piéger et stocker les oxydes d'azote quand le catalyseur de réduction catalytique sélective n'est pas catalytiquement actif. Quand la température augmente dans l'échappement les $NO_x$ sont thermiquement désorbés du catalyseur d'oxydation DOC à partir de typiquement 250°C lorsque le catalyseur de réduction catalytique sélective devint actif, typiquement à partir de 150°C, de manière à réagir avec le $NH_3$ stocké dans le revêtement du catalyseur de réduction catalytique sélective de $NO_x$.

De tels dispositifs de stockage de $NO_x$ sont souvent appelés absorbeur ou accumulateur passif de $NO_x$ ou PNA pour « Passive NOx Adsorber » selon la terminologie anglo-saxonne ou PLNT pour « Passive Lean NOx Trap » selon la terminologie anglo-saxonne ou quand placés dans un DOC, DOAC pour « Diesel Oxidation Adsorption Catalyst » selon la terminologie anglo-saxonne.

L'injection de $NH_3$ est contrôlée en visant un niveau de $NH_3$ stocké dans le revêtement catalytique du catalyseur de réduction catalytique sélective, SCR, qui évolue en pratique alors qu'il est consommé par les $NO_x$.

Jusqu'à présent la quantité de $NO_x$ entrant dans le SCR est considérée comme égale aux émissions du bloc moteur. On place typiquement une sonde $NO_x$ en aval du catalyseur de réduction catalytique sélective laquelle mesure le niveau de $NO_x$ en sortie du pot d'échappement. La différence entre le niveau de $NO_x$ en sortie du bloc moteur et en sortie du pot d'échappement correspond à un niveau de $NH_3$ consommé et ainsi une injection de $NH_3$ est mise en oeuvre pour restaurer le $NH_3$ considéré comme consommé dans le catalyseur de réduction catalytique sélective.

Il existe alors un risque de sur-injection ou de sous-injection d'ammoniac, $NH_3$. Si l'on met en oeuvre une sur-injection de $NH_3$ alors le revêtement catalytique du catalyseur de réduction catalytique sélective se sature en $NH_3$ et le $NH_3$ est dégagé par le pot d'échappement causant en d'autres termes une fuite de $NH_3$. Une telle perte de $NH_3$ va diminuer l'autonomie du réservoir de réducteur. D'autre part le $NH_3$ est un gaz odorant et fait partie des gaz à effet de serre. Les fuites de $NH_3$ doivent être réduites au maximum.

Par ailleurs, si l'on met en oeuvre une sous-injection de $NH_3$, alors le dispositif de dépollution ne fonctionne plus correctement, délivrant notamment un résultat erroné à un système de diagnostic embarqué ou OBD pour « On Board Diagnostics » selon la terminologie anglo-saxonne.

Il existe donc un besoin pour gérer de manière fine l'injection d'agent réducteur.

On connait par exemple du document FR2998001 un dispositif de dépollution de gaz d'échappement à injection d'agent réducteur maitrisé qui prend en compte la présence d'un accumulateur passif de $NO_x$, PNA disposé en amont du catalyseur de réduction catalytique sélective, SCR. Le document FR2998001 présente un modèle de stockage des NOx dans le PNA, ce qui permet d'affiner la détermination des NOx entrant dans le catalyseur de réduction catalytique sélective, SCR, cependant il ne tient pas compte de la part de NOx transformé en protoxyde d'azote, $N_2O$, au niveau du catalyseur d'oxydation, DOC.

Par conséquent, le but de la présente invention est de résoudre les inconvénients précités et de proposer un dispositif de dépollution de gaz d'échappement d'un moteur de véhicule automobile qui permet de mieux déterminer la quantité de $NO_x$ présents dans les gaz d'échappement entrant dans le catalyseur de réduction catalytique sélective afin de gérer de manière plus fine l'injection d'agent réducteur.

Pour atteindre cet objectif, il est prévu selon l'invention un dispositif de dépollution de gaz d'échappement d'un moteur à combustion pour véhicule automobile, comprenant un catalyseur de réduction catalytique sélective, un catalyseur d'oxydation disposé en amont du catalyseur de réduction catalytique sélective et une unité de contrôle, l'unité de contrôle comprenant les instructions requises pour mettre en oeuvre les étapes suivantes :

- Déterminer les oxydes d'azote présents dans les gaz d'échappement en sortie du bloc moteur,
- Déterminer un débit d'injection d'agent réducteur dans le catalyseur de réduction catalytique sélective pour réduire les oxydes d'azote entrant le catalyseur de réduction catalytique sélective et y maintenir une quantité d'agent réducteur présent dans ledit catalyseur,

- Piloter une injection d'agent réducteur d'oxydes d'azote dans le catalyseur de réduction catalytique sélective selon le débit d'injection ainsi déterminé,

caractérisé en ce que l'unité de contrôle comprend les instructions requises pour mettre en oeuvre un modèle de réaction d'oxydes d'azote en protoxyde d'azote dans le catalyseur d'oxydation et déterminer les oxydes d'azote entrant dans le catalyseur de réduction catalytique sélective en ôtant des oxydes d'azote présents dans les gaz d'échappement en sortie du bloc moteur la part des oxydes d'azote transformés en protoxyde d'azote.

De préférence, le modèle de réaction comprend un membre indiquant une vitesse de disparition des oxydes d'azote en protoxyde d'azote de la forme :

$$R = A.e^{-E/_{R_g}.T}.[NOx]$$

Où:

> R est la vitesse de disparition des oxydes d'azote
> A un facteur pré-exponentiel,
> Rg est la constante des gaz parfait,
> E est une énergie d'activation,
> T est la température dans le catalyseur d'oxydation (2),
> [NO$_x$] est la concentration des oxydes d'azote entrant dans la ligne d'échappement,

De préférence encore, la vitesse R de disparition des oxydes d'azote prend en compte un facteur d'inhibition I tel que :

$$R = \frac{A.e^{-E/_{R_g}.T}.[NOx]}{I}$$

Dans une variante, le dispositif de dépollution de l'invention, comprend un absorbeur passif d'oxydes d'azote disposé en amont du catalyseur de réduction catalytique sélective , l'unité de contrôle comprenant les instructions requises pour mettre en oeuvre un modèle indiquant la quantité de NOx stockés dans l'absorbeur passif et pour déterminer les oxydes d'azote entrant dans le catalyseur de réduction catalytique sélective en prenant en compte la part des oxydes d'azote stockés dans l'absorbeur passif.

En variante, le modèle indiquant la quantité de NOx stockés dans l'absorbeur passif d'oxydes d'azote comprend un membre indiquant un taux de d'absorption qui est de la forme :

Taux d'absorption de NOx = $K_{ads, NOx}$ * [NOx] * $(1-\theta_{NOx})$

Où $K_{ads, NOx} = A_{ads, NOx}$ * exp($-E_{ads,NOx}$ / $R_g$*Ts)
Où $A_{ads,NOx}$ est un facteur pré-exponentiel, $E_{ads,NOx}$ est une valeur d'énergie d'activation pour l'absorption, Rg est la constante des gaz parfait, et Ts est la température de surface dans l'absorbeur passif d'oxydes d'azote.

En variante encore, le modèle indiquant la quantité de NO$_x$ stockés dans l'absorbeur passif d'oxydes d'azote comprend un membre indiquant un taux de désorption qui est de la forme :

Taux de désorption de NOx = $K_{des, NOx}$ * [$\theta$NOx]

Où $K_{des, NOx} = A_{des,NOx}$ * exp ($-E_{des, NOx}$* [$\theta$NOx] / $R_g$*Ts)
Où $A_{des,NOx}$ est un facteur pré-exponentiel, $E_{des,NOx}$ est la valeur de l'énergie d'activation de désorption, et [$\theta$NOx] est la concentration en NOx en surface dans l'absorbeur passif d'oxydes d'azote.

En variante, le catalyseur d'oxydation et l'absorbeur passif d'oxydes d'azote sont intégrés sur un même support physique.

En variante encore, le catalyseur de réduction catalytique sélective est disposé dans un filtre à particules.

L'invention concerne aussi un groupe motopropulseur comprenant un moteur à combustion associé à un dispositif de dépollution selon l'une quelconque des variantes précédemment décrites.

L'invention concerne encore un véhicule automobile comprenant un groupe motopropulseur de l'invention.

**Brève description des dessins**

D'autres particularités et avantages apparaîtront à la lecture de la description ci-après d'un mode particulier de réalisation, non limitatif de l'invention, faite en référence aux figures dans lesquelles :

- La figure 1 est une représentation schématique d'un dispositif d de dépollution des gaz d'échappement selon un mode de réalisation de l'invention.
- La figure 2 est une représentation schématique d'une stratégie globale de gestion de dispositif d'injection d'agent réducteur de l'invention.

**Description détaillée**

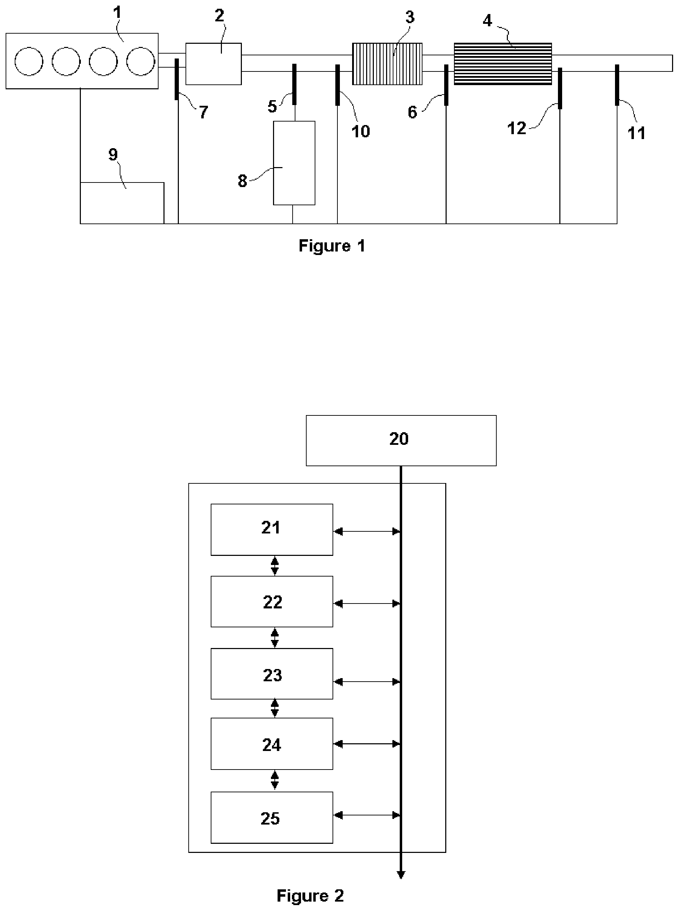

Le dispositif de dépollution des gaz d'échappement représenté sur la figure 1 est disposé en sortie d'un moteur 1 à combustion de type diesel. De l'amont vers l'aval, relativement au sens d'écoulement des gaz d'échappement, il comprend un catalyseur d'oxydation 2. Il comprend également un catalyseur 3 de réduction catalytique sélective de NOx et un filtre à particules 4. Le catalyseur de réduction catalytique sélective 3 est alimenté par un injecteur d'urée 5. Le moteur 1 et dispositif de dépollution des gaz d'échappement forment un groupe motopropulseur.

Le catalyseur d'oxydation a pour fonctions de traiter le monoxyde de carbone, CO et les hydrocarbures imbrûlés, HC, ainsi que d'assurer un rapport optimum $NO_2/NO_x$.

Dans une variante non représentée, le dispositif de dépollution peut aussi comprendre un absorbeur passif de NOx, encore communément désigné par l'acronyme PNA pour « Passive NOx Adsorber » selon la terminologie anglo-saxonne. Dans cette variante, l'absorbeur passif de NOx est disposé en amont du catalyseur 3 de réduction catalytique sélective de NOx. Pour des raisons de compacité, l'absorbeur passif de NOx peut être intégré avec le catalyseur d'oxydation 2 sur un même support physique.

L'absorbeur passif de NOx a pour fonction d'accumuler efficacement les oxydes d'azote à basse température, c'est-à-dire ici de la température ambiante jusqu'à une température de l'ordre de 200°C, au-delà de cette température les $NO_x$ sont relâchés.

Le dispositif de dépollution comporte en outre une sonde de pression 6 placée en entrée du filtre à particules 4, et un capteur d'oxydes d'azote 7 placé entre le moteur 1 et le catalyseur d'oxydation 2.

Un réservoir 8 d'agent réducteur alimente l'injecteur d'urée 5. En outre, une unité de contrôle tel qu'un calculateur 9 est disposée en connexion notamment avec le réservoir d'urée 8, avec la sonde de pression 6, avec le détecteur 7 de $NO_x$, avec un thermocouple 10 placé entre le catalyseur d'oxydation 2 et le catalyseur de réduction catalytique sélective 3, ainsi qu'avec une sonde de pression 11 et un détecteur d'oxydes d'azote 12 placés en sortie du dispositif.

Dans une variante non représentée, le filtre à particules 4 et le catalyseur 3 sont remplacés par un filtre à particules imprégnés d'un revêtement catalytique de réduction catalytique sélective des oxydes d'azote.

Le moteur 1, essence ou diesel ou des variations de type moteur hybride, peut être utilisé selon une quelconque stratégie de combustion. Le moteur fonctionne totalement ou partiellement en conditions pauvres de manière à disposer typiquement un catalyseur de réduction catalytique sélective de $NO_x$ sur la ligne d'échappement.

L'unité de contrôle 9 comprend les instructions requises pour gérer, outre le diagnostic embarqué, également la stratégie d'injection d'agent réducteur. Un quelconque agent réducteur à introduire dans la ligne d'échappement peut être utilisé pour réduire les polluants de type $NO_x$ par l'intermédiaire du catalyseur de réduction catalytique sélective 3. Des exemples typiques comprennent : CO, HC, alcools, glycols, les esters de glycérol, des acides, l'ammoniac, l'hydroxyde d'ammonium, les formates d'ammonium, l'urée, la guanidine, les sels de guanidine, les hydrocarbures, l'hydrogène, etc...

On va décrire, en référence à la figure 2 un procédé de gestion du dispositif d'injection d'agent réducteur utilisant :

- un modèle d'estimation des oxydes d'azote par le bloc moteur (bloc 21),
- un modèle de stockage des oxydes d'azote dans l'absorbeur passif (bloc 22), pour le cas où dispositif de réduction d'oxydes d'azote comprend un absorbeur passif de NOx (PNA),
- un modèle de formation du protoxyde d'azote (bloc 23),
- un modèle de réduction catalytique des oxydes d'azotes (bloc 24) et,

- un modèle d'injection d'agent réducteur (bloc 25) pour réduire les oxydes d'azote entrant dans le catalyseur et maintenir à un niveau souhaité l'ammoniac, NH3, stocké dans le revêtement catalytique du catalyseur 3 de réduction catalytique sélective.

Dans cet exemple de réalisation, le produit réducteur injecté est de l'urée en solution aqueuse, et $NH_3$ est la molécule d'agent réducteur qui est stockée dans le catalyseur 3 de réduction catalytique sélective de $NO_x$ et qui réagit avec les oxydes d'azote.

Dans cet exemple, le bloc 21 du procédé de gestion est un modèle d'estimation des oxydes d'azote par le bloc moteur peut être basé sur des tables dépendant de paramètres de fonctionnement moteur tels que le couple, le régime, la température de liquide de refroidissement, la vitesse du véhicule. D'autres paramètres peuvent être pris en compte dans ce modèle. Les modèles de ce type sont bien connus. En variante une sonde $NO_x$ peut être utilisée ou des cartographies du moteur.

Le bloc 22 qui suit est un modèle indiquant la quantité de $NO_x$ stockés dans l'absorbeur passif. Ce modèle est ici divisé en deux sous-modèles qui sont respectivement un modèle d'absorption de $NO_x$ et un modèle de désorption de $NO_x$. Ces deux sous-modèles sont suivis par un modèle bilan aval à l'absorbeur passif (PNA).

Le modèle d'absorption de $NO_x$ est ici le suivant :

$$\text{Taux d'absorption de } NO_x = K_{ads,\,NOx} * [NOx] * (1-\theta_{NOx})$$

Où $K_{ads,\,NOx} = A_{ads,\,NOx} * \exp(-E_{ads,NOx} / R_g * Ts)$

Où $A_{ads,NOx}$ est un facteur pré-exponentiel, $E_{ads,NOx}$ est une valeur d'énergie d'activation pour l'absorption, $R_g$ est la constante des gaz parfait, et Ts est la température de surface dans le PNA. $[NO_x]$ est la concentration en $NO_x$ dans les gaz d'échappement en sortie du bloc moteur, et $\theta_{NOx}$ est l'étendue de la surface de sorption pour les espèces de type oxydes d'azote.

Le modèle de désorption est ici le suivant :

$$\text{Taux de désorption de } NO_x = K_{des,\,NOx} * [\theta NO_x]$$

Où $K_{des,\,NOx} = A_{des,NOx} * \exp(-E_{des,\,NOx} * [\theta NO_x] / R_g * T_s)$

Où $A_{des,NOx}$ est un facteur pré-exponentiel, $E_{des,NOx}$ est la valeur de l'énergie d'activation de désorption, et $[\theta NO_x]$ est la concentration en $NO_x$ en surface dans le PNA. Toutefois en variante les $NO_x$ peuvent être stockés dans la phase cristalline plutôt qu'en surface proprement dite.

Le modèle de bilan en sortie de l'absorbeur passif, PNA, prenant en compte la part des oxydes d'azote retenus est ici le suivant :

$$[NO_x \text{ sortie PNA}] = [NO_x \text{ sortie bloc moteur}] * \text{débit d'air} * Ts * (\text{Taux de désorption NOx} - \text{Taux d'absorption } NO_x).$$

Où $[NO_x$ sortie PNA] est la concentration en $NO_x$ dans les gaz d'échappement en sortie de l'absorbeur passif, PNA, et $[NO_x$ sortie bloc moteur] est la concentration en $NO_x$ dans les gaz d'échappement en sortie du bloc moteur.

Le bloc 23 qui suit est un modèle de transformation de $NO_x$, en particulier du monoxyde d'azote en protoxyde d'azote. La réaction de transformation du monoxyde d'azote en protoxyde d'azote est la suivante :

$$NO \rightarrow \frac{1}{2} N_2O + \frac{1}{4} O_2$$

Le modèle de réaction est

$$R = A.e^{-E/R_g.T}.[NOx]$$

Où:

> R est la vitesse de disparition des oxydes d'azote, plus précisément du monoxyde d'azote, NO,
> A un facteur pré-exponentiel,
> Rg est la constante des gaz parfait,
> E est une énergie d'activation,
> T est la température dans le catalyseur d'oxydation 2,
> [NO$_x$] est la concentration des oxydes d'azote entrant dans la ligne d'échappement,

La vitesse de disparition du monoxyde d'azote et la formation de N$_2$0 est aussi contraint par l'équilibre chimique de la réaction, NO peut aussi prendre en compte un facteur I d'inhibition et s'écrire alors :

$$R = \frac{A.\,e^{-E/R_g.T}.[NOx]}{I}$$

Avec I = T.(1+K[NO]) où K est la constante d'équilibre chimique de la réaction.

Le bilan en entrée du catalyseur 3 de réduction catalytique sélective des oxydes d'azote prend en compte la part des oxydes d'azote transformés en protoxyde d'azote en l'ôtant des oxydes d'azote en sortie de du bloc moteur :

$$[NO_x \text{ entrant SCR}] = [NO_x \text{ sortie PNA}] - [NO_x \text{ transformés en N}_2\text{O}]$$

Où [NO$_x$ entrant SCR] est la concentration en NO$_x$ dans les gaz d'échappement en entrée du catalyseur 3 de réduction sélective, [NO$_x$ sortie PNA] est la concentration en NO$_x$ dans les gaz d'échappement en sortie de l'absorbeur passif, PNA, comme déjà vu elle-même fonction de [NOx sortie bloc moteur], la concentration en NO$_x$ dans les gaz d'échappement en sortie du bloc moteur et [NO$_x$ transformés en N$_2$O] la concentration de NO$_x$ changés en protoxyde d'azote.

Dans le cas où le l'absorbeur passif n'est pas présent, le bilan en entrée du catalyseur 3 de réduction catalytique sélective des oxydes d'azote devient :

$$[NO_x \text{ entrant SCR}] = [NO_x \text{ sortie bloc moteur}] - [NO_x \text{ transformés en N}_2\text{O}]$$

Le bloc 24 est un modèle de réduction catalytique des oxydes d'azotes et de consommation d'ammoniac, NH3, stocké pour la consommation de NO$_x$ en entrée du catalyseur 3 de réduction sélective des oxydes d'azote dans le revêtement catalytique est ici exprimé par le modèle suivant :

$$R' = K(T) * [NO_x \text{ entrant SCR}] * [NH_3 \text{ stocké dans le SCR}] * (\text{débit de gaz d'échappement}).$$

Où R' est le taux de réaction, K(T) est le coefficient de taux de réaction ou constante de taux, [NO$_x$ entrant SCR] est la concentration en NO$_x$ dans les gaz d'échappement en entrée du catalyseur 3 de réduction sélective, [NH$_3$ stocké dans le SCR] est la concentration en surface dans le matériau catalytique poreux du catalyseur 3 de réduction catalytique sélective, et T est la température des gaz d'échappement, considérée comme égale à la température de surface du matériau catalytique du catalyseur 3 de réduction catalytique sélective.

Le modèle d'injection d'agent réducteur est quant à lui considéré ici comme correspondant au NH$_3$ consommé par les oxydes d'azote entrant dans le catalyseur 3 de réduction sélective des oxydes d'azote et équivaut au nouveau niveau cible d'injection de l'agent de réduction.

Le niveau cible de stockage de NH$_3$ dans le revêtement de nettoyage du SCR est donné quant à lui par un modèle qui est fonction de la température et d'un taux de débit.

Ainsi, ce niveau cible est ici donné par :

Niveau cible d'injection d'agent réducteur = (NH$_3$ stocké dans le SCR f(T, taux de débit d'agent réducteur)) + (NH$_3$ consommé par les NO$_X$ en entrée SCR)

Finalement une fois que le niveau réel de NH$_3$ consommé est déterminé, un débit plus précis d'agent réducteur est injecté dans la ligne d'échappement pour être décomposé en N$_2$ et H$_2$O et pour être restauré dans le revêtement de nettoyage du catalyseur de réduction catalytique sélective.

Grâce à un tel dispositif, moins d'agent réducteur est gaspillé en contrôlant mieux le niveau réel de NH3 disponible dans le revêtement catalytique de réduction des oxydes d'azote. Le risque de fuite de NH$_3$ à la sortie échappement est diminué, lequel NH$_3$ est odorant et contribue à l'effet de serre.

L'autonomie du réservoir d'agent réducteur est ainsi optimisée, prolongeant ainsi les intervalles de réapprovisionnement du réservoir. Le fait d'éviter une sous-injection permet également de réduire de fausses lectures positives par le système de diagnostic embarqué qui sont très intrusives et très coûteuses pour le client. Le dispositif permet donc une optimisation de la réduction des oxydes d'azote par un meilleur contrôle de l'injection d'agent réducteur, évitant une sur-injection ou une sous-injection.

Un tel modèle présente l'avantage de pouvoir être directement implémenté dans un système logique de gestion de réduction des oxydes d'azote et de permettre de déterminer plus précisément la quantité exacte de NH$_3$ consommée dans le catalyseur de réduction catalytique sélective des oxydes d'azote sans nécessiter de placer une sonde à oxydes d'azote en amont du catalyseur de réduction catalytique sélective, laquelle sonde présente un coût beaucoup plus élevé que la mise en place d'un tel modèle.

Ainsi un contrôle plus réaliste de l'injection d'agent réducteur dans la ligne d'échappement est réalisé.

**Revendications**

1. Dispositif de dépollution de gaz d'échappement d'un moteur à combustion pour véhicule automobile, comprenant un catalyseur (3) de réduction catalytique sélective, un catalyseur d'oxydation (2) disposé en amont du catalyseur (3) de réduction catalytique sélective et une unité de contrôle (9), l'unité de contrôle (9) comprenant les instructions requises pour mettre en oeuvre les étapes suivantes :

   - déterminer les oxydes d'azote présents dans les gaz d'échappement en sortie du bloc moteur,
   - déterminer un débit d'injection d'agent réducteur dans le catalyseur (3) de réduction catalytique sélective pour réduire les oxydes d'azote entrant le catalyseur (3) de réduction catalytique sélective et y maintenir une quantité d'agent réducteur présent dans ledit catalyseur,
   - piloter une injection d'agent réducteur d'oxydes d'azote dans le catalyseur de réduction catalytique sélective (3) selon le débit d'injection ainsi déterminé,

   **caractérisé en ce que** l'unité de contrôle comprend les instructions requises pour mettre en oeuvre un modèle de réaction d'oxydes d'azote en protoxyde d'azote dans le catalyseur d'oxydation (2) et déterminer les oxydes d'azote entrant dans le catalyseur (3) de réduction catalytique sélective en ôtant des oxydes d'azote présents dans les gaz d'échappement en sortie du bloc moteur la part des oxydes d'azote transformés en protoxyde d'azote.

2. Dispositif de dépollution selon la revendication 1, **caractérisé en ce que** le modèle de réaction comprend un membre indiquant une vitesse de disparition des oxydes d'azote en protoxyde d'azote de la forme :

$$R = A.e^{-E/R_g.T}.[NOx]$$

Où:
   - R est la vitesse de disparition des oxydes d'azote
   - A un facteur pré-exponentiel,
   - Rg est la constante des gaz parfait,
   - E est une énergie d'activation,
   - T est la température dans le catalyseur d'oxydation (2),
   - [NO$_x$] est la concentration des oxydes d'azote entrant dans la ligne d'échappement,

3. Dispositif de dépollution selon la revendication 2, **caractérisé en ce que** la vitesse R de disparition des oxydes d'azote prend en compte un facteur d'inhibition I tel que :

$$R = \frac{A.\,e^{-E/R_g.T}.[NOx]}{I}$$

4. Dispositif de dépollution selon l'une quelconque des revendications précédentes, **caractérisé en ce qu'**il comprend un absorbeur passif d'oxydes d'azote disposé en amont du catalyseur (3) de réduction catalytique sélective et **en ce que** l'unité de contrôle (9) comprend les instructions requises pour mettre en oeuvre un modèle indiquant la quantité de NOx stockés dans l'absorbeur passif et pour déterminer les oxydes d'azote entrant dans le catalyseur (3) de réduction catalytique sélective en prenant en compte la part des oxydes d'azote stockés dans l'absorbeur passif.

5. Dispositif de dépollution selon la revendication 4, **caractérisé en ce que** le modèle indiquant la quantité de NOx stockés dans l'absorbeur passif d'oxydes d'azote comprend un membre indiquant un taux de d'absorption qui est de la forme :

Taux d'absorption de NOx = $K_{ads,\,NOx}$ * [NOx] * (1-$\theta_{NOx}$)

Où $K_{ads,\,NOx}$ = $A_{ads,\,NOx}$* exp(-$E_{ads,NOx}$ / $R_g$*Ts)
Où $A_{ads,NOx}$ est un facteur pré-exponentiel, $E_{ads,NOx}$ est une valeur d'énergie d'activation pour l'absorption, $R_g$ est la constante des gaz parfaits, et Ts est la température de surface dans l'absorbeur passif d'oxydes d'azote.

6. Dispositif de dépollution selon la revendication 4 ou la revendication 5, **caractérisé en ce que** le modèle indiquant la quantité de $NO_x$ stockés dans l'absorbeur passif d'oxydes d'azote comprend un membre indiquant un taux de désorption qui est de la forme :

Taux de désorption de NOx = $K_{des,\,NOx}$ * [$\theta NOx$]

Où $K_{des,\,NOx}$ = $A_{des,NOx}$ * exp (-$E_{des,\,NOx}$* [$\theta NOx$] / $R_g$*Ts)
Où $A_{des,NOx}$ est un facteur pré-exponentiel, $E_{des,NOx}$ est la valeur de l'énergie d'activation de désorption, et [$\theta NOx$] est la concentration en NOx en surface dans l'absorbeur passif d'oxydes d'azote.

7. Dispositif de dépollution selon l'une des revendications 4 à 6, **caractérisé en ce que** le catalyseur d'oxydation (2) et l'absorbeur passif d'oxydes d'azote sont intégrés sur un même support physique.

8. Dispositif de dépollution selon l'une quelconque des revendications précédentes, **caractérisé en ce que** le catalyseur (3) de réduction catalytique sélective est disposé dans un filtre à particules.

9. Groupe motopropulseur, **caractérisé en ce qu'**il comprend un moteur à combustion (1) associé à un dispositif de dépollution selon l'une quelconque des revendications précédentes.

10. Véhicule automobile, **caractérisé en ce qu'**il comprend un groupe motopropulseur selon la revendication précédente.

**Patentansprüche**

1. Abgasreinigungsvorrichtung einer Brennkraftmaschine für Kraftfahrzeug, die einen Katalysator (3) mit selektiver katalytischer Reduktion, einen Oxidationskatalysator (2), der stromaufwärts des Katalysators (3) mit selektiver katalytischer Reduktion angeordnet ist, und eine Steuereinheit (9) umfasst, wobei die Steuereinheit (9) Anweisungen umfasst, die erforderlich sind, um die folgenden Schritte umzusetzen:

- Bestimmen der Stickstoffoxide, die in den Abgasen am Ausgang des Motorblocks vorhanden sind,
- Bestimmen eines Durchsatzes des Einspritzens von Reduktionsmittel in den Katalysator (3) mit selektiver katalytischer Reduktion, um die Stickstoffoxide, die in den Katalysator (3) mit selektiver katalytischer Reduktion eintreten, zu verringern und dort eine Menge an Reduktionsmittel, die in dem Katalysator vorhanden ist, aufrecht zu erhalten,
- Steuern eines Einspritzens von Reduktionsmittel von Stickstoffoxiden in den Katalysator (3) mit selektiver katalytischer Reduktion gemäß dem so festgelegten Einspritzdurchsatz,

**dadurch gekennzeichnet, dass** die Steuereinheit die Anweisungen umfasst, die erforderlich sind, um ein Reaktionsmodell von Stickstoffoxiden in Stickstoffprotoxid in dem Oxidationskatalysator (2) umzusetzen und die Stickstoffoxide, die in den Katalysator (3) mit selektiver katalytischer Reduktion eintreten, zu bestimmen, indem von den Stickstoffoxiden, die in den Abgasen am Ausgang des Motorblocks vorhanden sind, der Anteil der Stickstoffoxiden, der in Stickstoffprotoxid umgewandelt wurde, abgezogen wird.

2. Reinigungsvorrichtung nach Anspruch 1, **dadurch gekennzeichnet, dass** das Reaktionsmodell ein Glied umfasst, das eine Geschwindigkeit des Verschwindens der Stickstoffoxide in Stickstoffprotoxid mit der folgenden Form umfasst:

$$R = A.e^{-E/R_g.T}.[Nox]$$

wobei:
  - R die Geschwindigkeit des Verschwindens der Stickstoffoxide ist,
  - A ein vorexponentieller Faktor ist,
  - Rg die Idealgaskonstante ist,
  - E eine Aktivierungsenergie ist,
  - T die Temperatur in dem Oxidationskatalysator (2) ist,
  - [NOx] die Konzentration der Stickstoffoxide ist, die in den Abgasstrang Ausbreitung eintreten.

3. Reinigungsvorrichtung nach Anspruch 2, **dadurch gekennzeichnet, dass** die Geschwindigkeit R des Verschwindens der Stickstoffoxide einen Inhibitionsfaktor I derart berücksichtigt, dass:

$$\frac{R = A.e^{-E/R_g.T}.[Nox]}{I}$$

4. Reinigungsvorrichtung nach einem der vorhergehenden Ansprüche, **dadurch gekennzeichnet, dass** sie einen passiven Absorber von Stickstoffoxiden umfasst, der stromaufwärts des Katalysators (3) mit selektiver katalytischer Reduktion angeordnet ist, und dass die Steuereinheit (9) Anweisungen umfasst, die erforderlich sind, um ein Modell umzusetzen, das die Menge an NOx, die in dem passiven Absorber gelagert wird, angibt, und um die Stickstoffoxide, die in den Katalysator (3) mit selektiver katalytischer Reduktion eintreten, zu bestimmen, indem der Anteil der Stickstoffoxide, die in dem passiven Absorber gelagert ist, berücksichtigt wird.

5. Reinigungsvorrichtung nach Anspruch 4, **dadurch gekennzeichnet, dass** das Modell, das die Menge an NOx anzeigt, die in dem passiven Absorber von Stickstoffoxiden gelagert ist, ein Glied umfasst, das eine Absorptionsrate angibt, das die folgende Form hat:

$$NOx-Absorptionsrate = K_{ads,NOx} * [NOx]*(1-\theta_{NOx})$$

wobei $K_{ads,NOx} = A_{ads,NOx} * \exp(-E_{ads,NOx} * /R_g*Ts$
wobei $K_{ads,NOx}$ ein vorexponentieller Faktor ist, $E_{ads,NOX}$ der Wert von Aktivierungsenergie zur Absorption ist, Rg die Idealgaskonstante ist, und Ts die Oberflächentemperatur in dem passiven Absorber für Stickstoffoxide ist.

6. Reinigungsvorrichtung nach Anspruch 4 oder 5, **dadurch gekennzeichnet, dass** das Modell, das die Menge an NOx, die in dem passiven Absorber für Stickstoffoxide gelagert ist, ein Glied umfasst, das eine Desorptionsrate angibt, das die folgende Form hat:

$$\texttt{NOx-Desorptionsrate = K}_{\texttt{des,NOx}} \texttt{ * [}\theta\texttt{NOx]}$$

wobei $K_{des,NOx}$ = $A_{des,NOx}$ * exp (-$E_{des,NOx}$ * [$\theta$NOx]/$R_g$*Ts)
wobei $K_{des,NOx}$ ein vorexponentieller Faktor ist, $E_{des,NOx}$ der Wert der Aktivierungsenergie zur Desorption ist, und [$\theta$NOx] die NOx-Konzentration an der Oberfläche in dem passiven Absorber für Stickstoffoxide ist.

7. Reinigungsvorrichtung nach einem der Ansprüche 4 bis 6, **dadurch gekennzeichnet, dass** der Oxidationskatalysator (2) und der passive Absorber für Stickstoffoxide auf ein und demselben physischen Träger integriert sind.

8. Reinigungsvorrichtung nach einem der vorhergehenden Ansprüche, **dadurch gekennzeichnet, dass** der Katalysator (3) mit selektiver katalytischer Reduktion in einem Partikelfilter angeordnet ist.

9. Antriebsaggregat, **dadurch gekennzeichnet, dass** es eine Brennkraftmaschine (1) umfasst, die mit einer Reinigungsvorrichtung nach einem der vorhergehenden Ansprüche assoziiert ist.

10. Kraftfahrzeug, **dadurch gekennzeichnet, dass** es ein Antriebsaggregat nach dem vorhergehenden Anspruch umfasst.

**Claims**

1. An exhaust gas purification device of an internal combustion engine for a motor vehicle, comprising a selective catalytic reduction catalyst (3), an oxidation catalyst (2) disposed upstream of the selective catalytic reduction catalyst (3) and a control unit (9), the control unit (9) comprising the instructions required for implementing the following steps:

   - determining the nitrogen oxides present in the exhaust gases at the outlet of the engine block,
   - determining an injection rate of reducing agent in the selective catalytic reduction catalyst (3) to reduce the nitrogen oxides entering the selective catalytic reduction catalyst (3) and maintaining there a quantity of reducing agent present in said catalyst,
   - controlling an injection of reducing agent of nitrogen oxides in the selective catalytic reduction catalyst (3) according to the injection rate thus determined,

   **characterized in that** the control unit comprises the required instructions for implementing a reaction model of nitrogen oxides into nitrous oxide in the oxidation catalyst (2) and determining the nitrogen oxides entering in the selective catalytic reduction catalyst (3) by removing from the nitrogen oxides present in the exhaust gases at the outlet of the engine block the portion of the nitrogen oxides transformed into nitrous oxide.

2. The purification device according to claim 1, **characterized in that** the reaction model comprises an element indicating a rate of disappearance of the nitrogen oxides into nitrous oxide of the form:

$$R = A.e^{-E/R_g.T}.[Nox]$$

   in which:
   - ➢ R is the rate of disappearance of the nitrogen oxides
   - ➢ A is a pre-exponential factor,
   - ➢ Rg is the perfect gas constant,
   - ➢ E is an activation energy,
   - ➢ T is the temperature in the oxidation catalyst (2),
   - ➢ [NOx] is the concentration of the nitrogen oxides entering in the exhaust line.

3. The purification device according to claim 2, **characterized in that** the rate of disappearance R of the nitrogen oxides takes into account an inhibition factor I such that:

$$R = A.e^{-E/R_g.T}.[Nox]$$

$$I$$

4. The purification device according to any one of the preceding claims, **characterized in that** it comprises a passive absorber of nitrogen oxides disposed upstream of the selective catalytic reduction catalyst (3) and **in that** the control unit (9) comprises the required instructions for implementing a model indicating the quantity of NOx stored in the passive absorber and to determine the nitrogen oxides entering in the selective catalytic reduction catalyst (3) by taking into account the portion of the nitrogen oxides stored in the passive absorber.

5. The purification device according to claim 4, **characterized in that** the model indicating the quantity of NOx stored in the passive absorber of nitrogen oxides comprises an element indicating a rate of absorption which is of the form:

```
Rate of absorption of NOx = K_ads,NOx * [NO_x] * (1-θ_NOx)
```

in which $K_{ads,NOx} = A_{ads,\ NOx} * \exp(-E_{ads,NOx}/R_g*Ts)$
in which $A_{ads,NOx}$ is a pre-exponential factor, $E_{ads,NOx}$ is an activation energy value for the absorption, $R_g$ is the perfect gas constant, and Ts is the surface temperature in the passive absorber of nitrogen oxides.

6. The purification device according to claim 4 or 5, **characterized in that** the model indicating the quantity of NOx, stored in the passive absorber of nitrogen oxides comprises an element indicating a rate of desorption which is of the form:

```
Rate of desorption of NOx = K_des,NOx * [θNOx]
```

in which $K_{des,NOx} = A_{des,NOx} * \exp(-Ed_{es,NOx} * [\theta NOx]/R_g*Ts)$
in which $A_{des,NOx}$ is a pre-exponential factor, $E_{des,NOx}$ is the value of desorption activation energy, and $[\theta NOx]$ is the surface concentration of NOx in the passive absorber of nitrogen oxides.

7. The purification device according to one of claims 4 to 6, **characterized in that** the oxidation catalyst (2) and the passive absorber of nitrogen oxides are integrated on the same physical support.

8. The purification device according to any one of the preceding claims, **characterized in that** the selective catalytic reduction catalyst (3) is disposed in a particle filter.

9. A power train, **characterized in that** it comprises an internal combustion engine (1) associated with a purification device according to any one of the preceding claims.

10. A motor vehicle, **characterized in that** it comprises a power train according to the preceding claim.

**Figure 1**

**Figure 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2998001